# EUROPÄISCHE PATENTSCHRIFT

(11) **EP 0 981 705 B1**
(45) Veröffentlichungstag und Bekanntmachung des Hinweises auf die Patenterteilung: **14.01.2004**
(21) Anmeldenummer: 98913500.9
(22) Anmeldetag: 22.04.1998
(51) Int. Cl.: F16J 15/46

(54) **METALLISCHE ZWISCHENLAGE FÜR HOCHBEANSPRUCHBARE FLACHDICHTUNGEN UND VERFAHREN ZUR HERSTELLUNG EINER FLACHDICHTUNG MIT EINER SOLCHEN ZWISCHENLAGE**
INTERMEDIATE METALLIC LAYER FOR FLAT PACKING WHICH CAN BE SUBJECTED TO HIGH STRESSES, AND METHOD FOR PRODUCING A FLAT PACKING WITH SUCH INTERMEDIATE LAYER
COUCHE METALLIQUE INTERMEDIAIRE POUR GARNITURES PLATES FORTEMENT SOLLICITEES ET PROCEDE DE PRODUCTION D'UNE GARNITURE PLATE AVEC UNE TELLE COUCHE INTERMEDIAIRE

(30) Priorität: 16.05.1997 CH 114897
(43) Veröffentlichungstag der Anmeldung: 01.03.2000
(73) Patentinhaber: Unaxis Trading AG, 9477 Trübbach (CH)
(72) Erfinder: SCHERTLER, Roman, A-6922 Wolfurt (AT)
(74) Vertreter: Troesch Scheidegger Werner AG
(86) Internationale Anmeldenummer: PCT/CH1998/000156
(87) Internationale Veröffentlichungsnummer: WO 1998/053232

(56) Entgegenhaltungen:
- EP-A- 0 555 764
- US-A- 5 133 561
- US-A- 5 415 729
- US-A- 5 533 736

## Beschreibung

Die vorliegende Erfindung betrifft eine Vakuumdichtungsanordnung nach dem Oberbegriff von Anspruch 1.

Im weiteren betrifft die vorliegende Erfindung Vakuumbehandlungsanlagen nach dem Oberbegriff von Anspruch 8, sowie ein Verfahren nach demjenigen von Anspruch 20.

Aus der EP 0 555 764 bzw. der US-A-5 415 729 ist eine Vakuumdichtungsanordnung eingangs genannter Art bekannt. Sie besteht aus einem metallischen Balgrohr, welches über eine eigens dafür vorgesehene Partie aus elastischem Material, wie beispielsweise aus einem Polymer, wie Teflon oder aus einem elastomeren Material dichtend gegen den passiven, zweiten Dichtungsteil wirkt.

Dieses Vorsehen ist unter folgenden Aspekten oft nachteilig:
- Ein druckexpandierter, metallischer Balg gewährleistet entlang seiner an sich formstabilen, relativ grossen Balgstimfläche oft die jeweils erforderliche Dichtheit nur dann, wenn die genannte Stirnfläche mit einem elastischen Teil versehen ist.
- Die Rückstellkraft, welche aufgrund der Balg-Federwirkung diesen bei Druckentlastung rücktreibt, ist relativ gering, die in rückgeholter Position eingenommene Lage des Balges ist relativ unbestimmt.
- Ein Balg ist für die Realisierung langer Dichtkonturen höchst aufwendig, wenn nicht gar ungeeignet.
- im Betrieb sind Balge Resonanzerscheinungen unterworfen, die deren Lebensdauer aufgrund der resultierenden, gegebenenfalls hochfrequenten Wechselbelastungen drastisch reduzieren.

Aus der US-A-5 133 561 ist eine Dichtungsanordnung eingangs genannter Art bekannt. Es ist eine sanft gebogene Metallmembran vorgesehen, die am einen der dichtend zu verbindenden Teile festgeschweisst ist. Sie wird mittels der Differenz der auf sie wirkenden pneumatischen Drücke betätigt. Sie bildet gemeinsam mit der Druckzuführung am erwähnten Teil einen expandierbaren Raum.

Die vorliegende Erfindung geht von der Aufgabe aus, mit einer solchen Membran eine präzis vorgebbare, überall gleichverteilte Dichtwirkung zu erzielen und, im rückgeholten Zustand, eine exakt vorgegebene Rückholposition. Dies ermöglicht, mit sehr kleinen Dichtungshüben zu arbeiten, und trotzdem, beim Dichten relativ zueinander bewegter Teile, bei rückgeholter Membran vakuumtechnisch höchst unerwünschtes, reibendes Berühren der Dichtungsteile befürchten zu müssen. Dies wird durch Ausbildung der Vakuumdichtungsanordnung nach dem Kennzeichen von Anspruch 1 erreicht.

Eine solche Dichtungsanordnung ist zudem in ihrem Aufbau wirtschaftlich einfach und erlaubt, insbesondere wenn gemäss Anspruch 2, exakt selbstrückstellend schnelle Dicht-Takte zu realisieren - auch wegen der präzisen und damit sehr kurz realisierbaren Dichthübe.

Dies erlaubt Anlagen, wie insbesondere die erfindungsgemässe, mit den genannten Vorteilen zu realisieren und damit hohe Behandlungsdurchsätze bei geringer Baugrösse zu verwirklichen.

Die erfindungsgemässe Dichtanordnung erlaubt es weiter, gemäss Anspruch 3, lineare und/oder gebogene Dichtkonturen zu realisieren.

Es ist weiter unnötig, an den Dichtflächen elastische Gebilde vorsehen zu müssen, um zuverlässig und gleichförmig verteilt den erforderlichen Dichtdruck zu erwirken. Dies erlaubt, gemäss dem Wortlaut von Anspruch 5 vorzugehen. Damit ist die Möglichkeit geschaffen, bei Erstellen von Dichtheit und nach Massgabe des Dichtdruckes, gesteuerte Metall/Metall-Übergänge zu schaffen und damit gezielt Wärmebrücken zwischen den zu dichtenden Teilen zu erstellen.

Nach dem Wortlaut von Anspruch 6 kann es trotzdem vorteilhaft sein, am zweiten der erwähnten Teile mindestens eine Partie gummielastisch auszubilden, sei dies aus Impulsdämpfungs-Gründen, oder um die Zuverlässigkeit einer erstellten Dichtung noch weiter zu verbessern, insbesondere bei ausgedehnter Dichtfläche.

Grundsätzlich kann der zweite Dichtungsteil, gegen den der aktive, expandierbare wirkt, ebenfalls aktiv, d.h. expandierbar sein, so z.B. gleich ausgebildet sein, wie der erste oder aber passiv, d.h. nicht expandierbar ausgebildet sein.

Bei den aktiven, expandierbaren Dichtungsteilen an der Anlage gemäss der genannten EP 0 555 764 handelt es sich um gummielastische Dichtungsschläuche. Diese sind, insbesondere für hochrein zu führende Behandlungsprozesse bezüglich Gasdiffusion und Gasabsorption (Verschlechterung des Vakuums), bezüglich thermischer Belastbarkeit und ihrer Standzeiten nachteilig. Im weiteren sind sie, wenn überhaupt, nur undefiniert, einsatzdauerabhängig, temperaturabhängig selbstrückstellend, womit auch schnelle Dichttakte bei Ausnützung der Selbstrückstellung nicht möglich sind. Sie wirken bezüglich Druck-Wechselbeanspruchung wie Tiefpassfilter.

Diese Nachteile werden durch die Anlage nach dem kennzeichnenden Teil von Anspruch 8 gelöst.

Gemäss der erwähnten EP 0 555 764 bzw. der US 5 415 729 sind pneumatisch bzw. hydraulisch betätigbare Dichtungsteile am Stator vorgesehen, während am Rotor die passiven, mit den ersteren dichtend in Wirkverbindung tretenden Dichtungsteile angeordnet sind.

Dies mag zwar auf erstes Zusehen hin vorteilhaft aussehen, indem Druckbeaufschlagungs-Leitungen zu den gummielastischen Dichtungsschläuchen am Stator, d.h. ausschliesslich an unbewegten Gehäuseteilen, geführt werden können. Anderseits ist es aber bekannt, dass bei Anlagen der genannten Art nicht immer die gesamte Mehrzahl vorgesehener Öffnungen mit Behandlungs- bzw. Transportstationen bestückt wird, sondern dass je nach zu fahrendem Behandlungsprozess eine oder meist gar mehrere der vorgesehenen Öffnungen mit Deckeln dichtend verschlossen werden. Damit ist aber jeweils ein relativ grosser Aufwand zu betreiben, um die bei den erwähnten, nicht eingesetzten Öffnungen vorab vorgesehenen, aktiven Dichtungen nicht zu beschädigen. In solchen Fällen ist auch das ganze vorgesehene Druckverteilsystem schlecht ausgenutzt. Kommt hinzu, dass die Druckverteilung an die einzelnen Dichtungsanordnungen relativ lange Leitungen, entlang des Anlagengehäuses verzweigt, erfordert, wobei die jeweiligen relativ grossen Leitungs-Volumina insbesondere bei raschem Druckaufbau zu berücksichtigen sind.

Dies wird bei der Ausbildung der Anlage nach Anspruch 9 wesentlich verbessert.

Bevorzugterweise wird eine Anlage gemäss Anspruch 10 vorgeschlagen.

In den Ansprüchen 11 bis 17 sind bevorzugte Ausführungsvarianten der Vakuumbehandlungsanlagen spezifiziert. Dabei spezifiziert Anspruch 10 als ganz besonders bevorzugte Ausführungsform, dass die Vakuumdichtungsanordnungen an der erwähnten Anlage, nämlich insbesondere rotorseitig, als Membran, wie dies in den Ansprüchen 1 bis 7 spezifiziert ist, ausgebildet ist, mit all den erwähnten Vorteilen dieser Anordnung.

Die Erfindung wird anschliessend beispielsweise anhand von Figuren erläutert. Diese zeigen:
- Fig. 1: schematisch und im Querschnitt eine Vakuumdichtungsanordnung mit Metallmembran, zum Verständnis der vorliegenden Erfindung,
- Fig. 2: ausgehend von einer Darstellung gemäss Fig. 1, eine bevorzugte Ausführungsform der erfindungsgemässen Vakuumdichtungsanordnung,
- Fig. 3: einen Längsschnitt durch eine bevorzugte Ausfuhrungsform einer erfindungsgemässen Vakuumbehandlungsanlage,
- Fig. 4: die erfindungsgemässe Dichtanordnung in einer weiteren Ausführungsform,
- Fig. 5: in Aufsicht, mögliche Realisationsformen der erfindungsgemässen Dichtanordnung,
- Fig. 6: schematisch eine Antriebsanordnung für die Werkstückaufnahmen an der Anlage nach Fig. 3 und
- Fig. 7: die Antriebsanordnung nach Fig. 6, weitergebildet für eine Anlage prinzipiell gemäss Fig. 3, bei der die Werkstückaufnahmen mindestens Werkstückträger für zwei Werkstücke aufweisen.

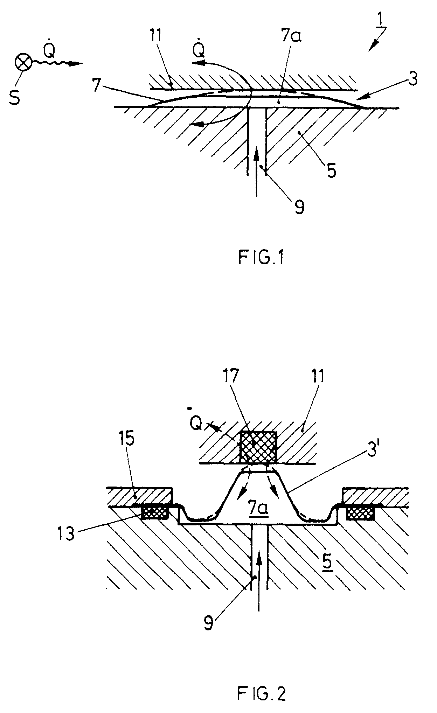

Gemäss Fig. 1 umfasst eine Dichtungsanordnung 1 - zum Verständnis der vorliegenden Erfindung - einen gesteuerten bzw. aktiven Teil 3, welcher durch eine allseitig dichtend mit einem der Anlageteile 5 verbundenen Metallmembran 7 besteht. In dem zwischen Metallmembran 7 und zugeordnetem Anlagenteil 5 gebildeten Hohlraum 7a mündet eine Druckbeaufschlagungsleitung 9 ein, für ein gasförmiges oder gegebenenfalls flüssiges Betätigungsmedium. Die Membran 7 wird bei Druckbeaufschlagung federnd über einen relativ geringen Hub (gestrichelt dargestellt) hochgespannt und legt sich an den mit dem Teil 5 dichtend zu verbindenden Anlageteil 11 an. Die Membran 7, im wesentlichen als Metallfeder ausgebildet, biegt sich bei Druckentlastung aufgrund ihrer Federeigenschaft in die exakt vorgegebene Ruheposition zurück. Handelt es sich beim Anlageteil 11 und insbesondere bei der Partie dieses Teils, wogegen sich die Membran 7 bei Dichtheitserstellung anpresst, um einen metallischen Teil, so stellt sich dabei, wie mit dem Doppelpfeil Q dargestellt, gesteuert eine Wärmebrücke bzw. ein thermischer Kurzschluss ein, wobei insbesondere auch die Wärmeleitung des unter Druck gesetzten Betätigungsmediums aus Leitung 9 - dann vorzugsweise ein flüssiges - mitzuberücksichtigen ist. Dadurch wird nebst dem Erstellen der Dichtheit gezielt und je nach Richtung der zwischen den Teilen 5 und 11 herrschenden Temperaturgradienten eine Wärmefluss-Verbindung erstellt. Damit ist es möglich, wenn, wie in Fig. 1 schematisch dargestellt, eine Wärmequelle S auf einer Seite der Dichtungsanordnung 1 liegt beispielsweise am Teil 11, den Wärmestrom auf den Teil 5 abzulenken, um zu verhindern, dass massgebliche Wärmeanteile am Anlagenteil 11 gemäss Fig. 1 nach rechts abfliessen: Gesteuert wird ein thermischer Kurzschluss erstellt.

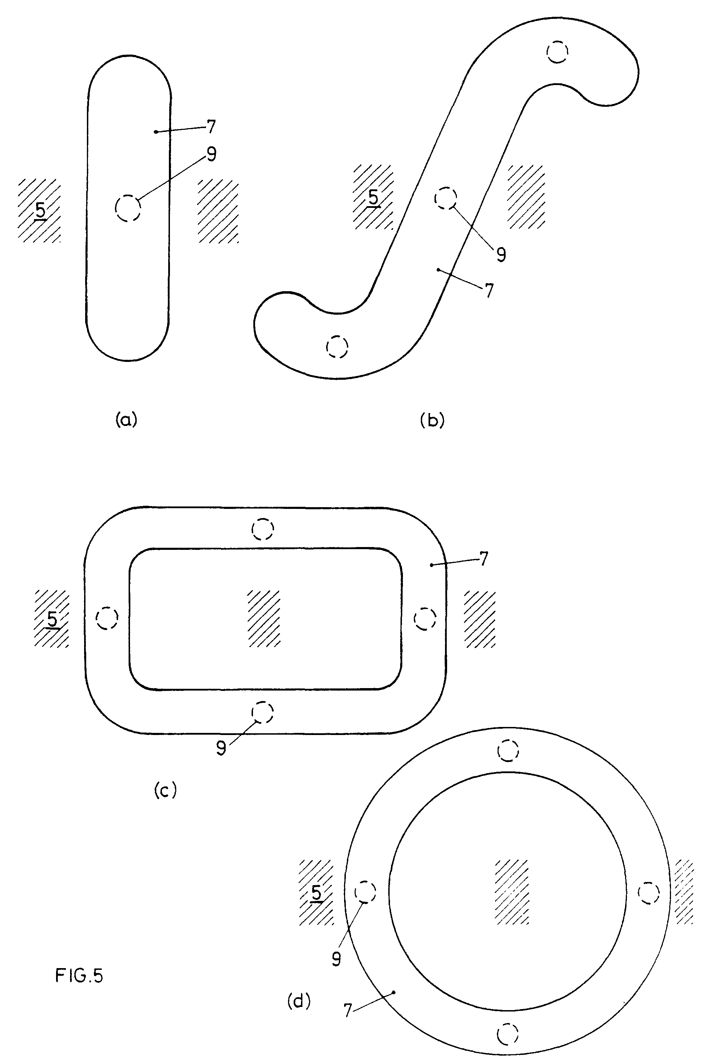

Eine solche Dichtungsanordnung nach Fig. 1 kann entlang langer und praktisch beliebig geformter, zu dichtender Konturen geführt werden, wie dies insbesondere auch im Zusammenhang mit der Beschreibung eines bevorzugten Ausführungsbeispiels der erfindungsgemässen Anlage ersichtlich werden wird und in Fig. 5(a) bis (d) beispielsweise dargestellt ist, sofern präzise vorgebbare; überall gleichverteilte Dichtwirkung erzielt wird.

In Fig. 2 ist nun eine Ausführungsform einer erfindungsgemässen Dichtungsanordnung hierfür dargestellt. Es sind weitgehend dieselben Bezugszeichen wie in Fig. 1 verwendet. Die Metallmembran 3' ist hier im wesentlichen W-förmig ausgebildet. Dabei sind die Schenkel des W lateral ausgebogen, und die W-Umbiegungen sind jeweils U-förmig. Bei Druckbeaufschlagung durch Leitung 9 und im Unterschied zu einem Balg legt sich durch geringfügige Krümmungsänderungen in der W-Querschnittsform die Membran dichtend an den Anlageteil 11 an. In dieser Fig. ist auch dargestellt, wie beispielsweise die seitliche Dichtheit des unter der Membran 3' liegenden Druckraumes 7a erstellt wird, nämlich mittels gummielastischer Dichtungen 13, gegen welche die Membran 3' mittels Spannorganen 15 gespannt wird.

In Fig. 2 ist als weitere Alternative dargestellt, am Anlageteil 11 und in dessen Dichtungsbereich mindestens über einen begrenzten Abschnitt eine gummielastische Dichtung 17 vorzusehen, lateral aber durchaus die Möglichkeit offenlassend, gemäss den diesbezüglichen Ausführungen zu Fig. 1, aktiv gesteuerte Wärmebrücken Q zu erstellen.

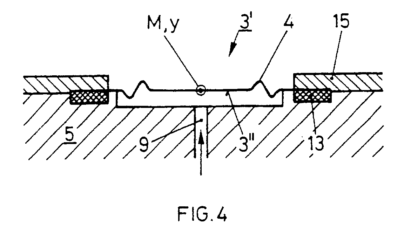

In Fig. 4 ist eine weitere Ausführungsform der Membran 3' druckdosenähnlich mit Sicken 4 versehen, und zwar symmetrisch zu einem Membran-Zentrum, M oder einer Membran-Mittenachse y angeordnet.

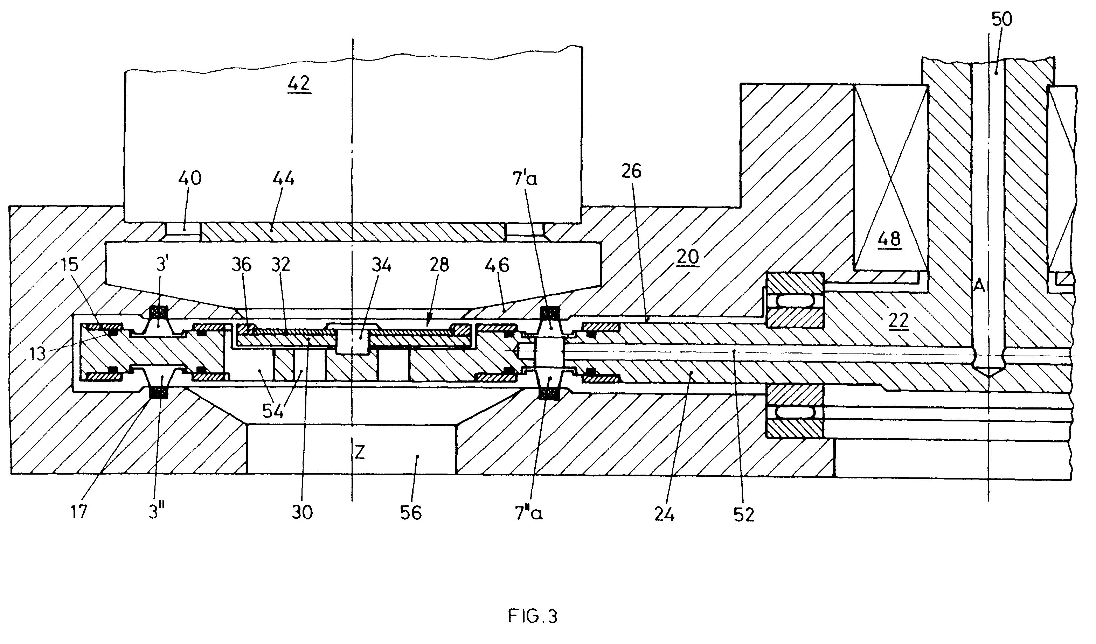

In Fig. 3 nun ist vereinfacht und im Längsschnitt eine erfindungsgemässe Vakuumbehandlungsanlage in bevorzugter Ausführungsform dargestellt. Sie umfasst einen Stator 20, worin, getrieben, ein Rotor 22 mit Rotorachse A umläuft. Der Rotor 22 weist eine scheibenförmige Auskragung 24 auf. An der einen Stirnfläche 26 der Rotorscheibe 24 sind verteilt mehrere Werkstückaufnahmen 28 vorgesehen, wie beispielsweise dargestellt, gebildet durch je Aufnahmeteller 30 für scheibenförmige Werkstücke 32 z.B. mit Zentrumsloch und mit, wie z.B. für die CD-Bearbeitung bekannt, Zentrumsmaske 34 und Peripheriemaske 36. Am Stator 20, radial auf die vorgesehenen Werkzeugaufnahmen 28 am Rotor 22 ausgerichtet, sind mehrere Öffnungen 40 vorgesehen. Mindestens an einem Teil dieser Öffnungen 40 sind Bearbeitungsstationen und/oder Schleusen bzw. Transportstationen 42 angeflanscht. In Fig. 3 ist eine Sputterstation mit Target 44 und Blende 46 dargestellt.

Schematisch zeigt 48 den Antriebsmotor für den Rotor 22. Am Rotor 22 ist, um jede der Werkzeugaufnahmen 28, eine umlaufende Dichtungsmetallmembran 3', ausgebildet gemäss Fig. 2, vorgesehen, die dichtend am Rotor 22, so wie in Fig. 2 dargestellt, über laterale, gummielastische Dichtringe 13 und Spannringe 15 festgespannt ist.

Weiter bevorzugt ist an der Statorscheibe 24, den den Werkzeugaufnahmen 28 zugeordneten Dichtungsmembranen 3' gegenüberliegend, eine weitere, ringförmig umlaufende Dichtungsmembran 3" vorgesehen, ausgebildet und montiert gemäss den Ausführungen zu Fig. 2. Ebenfalls den Ausführungen zu Fig. 2 folgend, wirken die Dichtungsmembrane 3' und 3" je teils auf metallische Gegenflächen am Stator 20, teils auf gummielastische Dichtungsteile 17.

Koaxial zur Drehachse A des Rotors 22 führt eine Druckleitung 50 bis auf die Höhe der Rotorscheibe 24, wo, radial nach
aussen, Druckverteilleitungen 52 in die Druckräume 7'a, 7"a der Dichtungsmembrane 3' und 3" einmünden.

Durch Druckbeaufschlagung der Stammleitung 50 und damit der jeweiligen Verteil-Stichleitungen 52 werden gleichzeitig an den jeweiligen Werkstückaufnahmen 28, beidseits der Rotorscheibe 24, die Dichtungen 3', 3" zum Stator 20 erstellt, womit jegliche Biegebelastung des Rotortellers 24 verhindert wird. Es wird dabei ein vakuumtechnisch in sich geschlossener Raum von Öffnung 40 über Öffnungen 54 durch die Scheiben 24 auf die Rückseite der Scheibe 24 und zu einer jeweiligen weiteren Anflanschöffnung 56 im Stator 20 geschaffen, so dass durch Anflanschen einer Pumpe an die Öffnung 56 der jeweilig notwendige Behandlungsdruck für die Werkstücke erstellt werden kann, abgeschotet vom übrigen Volumen zwischen Stator 20 und Rotor 22. Damit ist eine kompakte Bauweise der Anlage erzielt.

Aufgrund der Metall/Metall-Kontakte zwischen den Metalldichtmembranen 3', 3" und dem Stator 20 wird weiter eine thermisch isolierte Zentrumszone seitens der Werkstückaufnahmen 28 geschaffen.

Gemäss Fig. 3 sind jeweils auf der einen Seite der Rotorscheibe 24 die Werkstückaufnahmen 28 angeordnet. Bei diesem Ausführungsbeispiel der Anlage werden die Werkstückaufnahmen 28 und damit insbesondere die Werkstücke 32 während ihrer Behandlung an der beispielsweise dargestellten Station 42 stationär gehalten. Der Öffnung 40 über der Rotorscheibe 24 gegenüberliegend ist im Stator 20 eine weitere Öffnung 56 vorgesehen, an welcher, falls der Prozess an der Station 42 dies erfordert, eine Vakuumpumpe angeschlossen wird, welche andernfalls mittels eines Deckels dichtend verschlossen wird. Durchgehende Öffnungen 54 in der Rotorscheibe 24 ermöglichen den Pumpdurchgriff von Öffnung 56 in den Öffnungsbereich 40 und damit in die Behandlungsstation 42. Aufgrund der erfindungsgemäss vorgesehenen Dichtungen 3" wird ein vakuumtechnisch abgeschoteter Raum über Öffnung 56, Werkstückaufnahme 28, Öffnung 40 und Behandlungsstation 42 geschaffen.

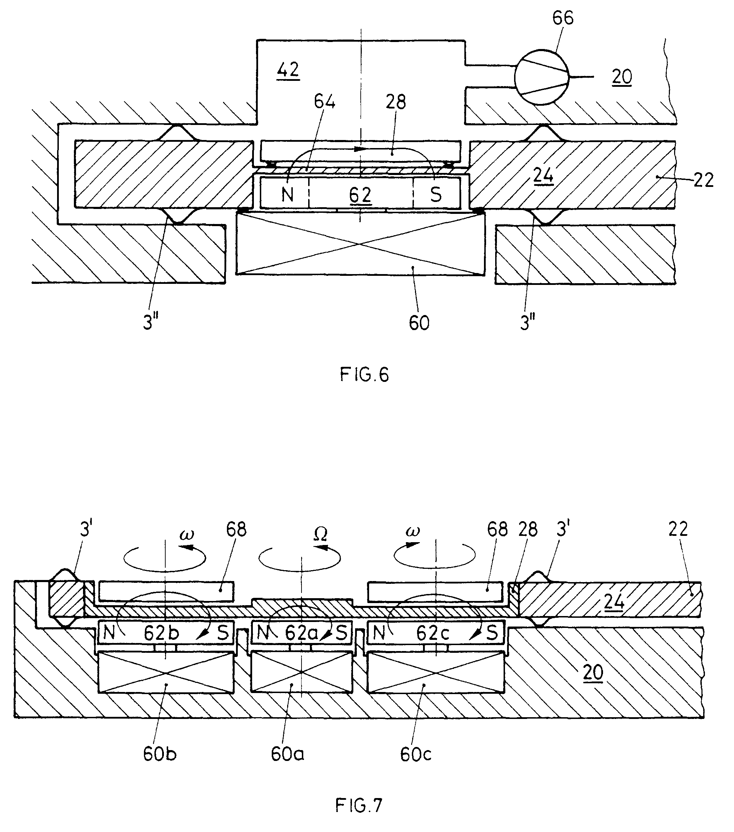

In gewissen Fällen ist es erwünscht, das wie in Fig. 3 dargestellte, positionierte Werkstück 32, an der Werkstückaufnahme 28, während der Behandlung mittels der Station 42 rotieren zu lassen. Ein hierfür bevorzugterweise vorgesehener Antrieb ist schematisch in Fig. 6 dargestellt, wobei bezüglich Antrieb unwesentliche Teile aus Übersichtsgründen in dieser Figur weggelassen sind. Bei dieser Ausführungsform ist an der Rotorscheibe 24, mit den schematisch dargestellten Dichtungen 3", ein Antriebsmotor 6 angeflanscht und greift mit einem Antriebsrotor 62 magnetisch durch eine Trennwand 64 an der Rotorscheibe 24 auf die drehbar an der Scheibe 24 gelagerte Werkstückaufnahme 28 durch. Am Rotor 62 und/oder an der Werkstückaufnahme 28 sind Magnete, vorzugsweise Permanentmagnete, angeordnet. Wie schematisch in Fig. 6 dargestellt, wird bei dieser Ausführungsvariante eine Vakuumpumpe 66 am Stator 20 und bezüglich der Scheibe 24 auf derselben Seite vorgesehen, wie die Stationen 42.

Bei dieser Ausführungsform dreht der Antriebsmotor 60, fest der jeweiligen Werkstückaufnahme 28 zugeordnet, mit dem Rotor 22 um. Selbstverständlich ist es durchaus möglich, den Antriebsmotor 60 ortsfest am Stator 20 vorzusehen und den Durchgriff des Antriebsrotors 62 auf die Werkstückaufnahme 28 nur dann zu realisieren, wenn letztere in Ausrichtung zur Station 42 und dem ortsfesten Antriebsmotor 60/62 mittels der Scheibe 24 gedreht worden ist. Diese Art des Werkstück-Drehantriebes ist in Fig. 7 eingesetzt, wobei, auch bei der Ausführungsform gemäss Fig. 7, die dort vorgesehenen Antriebsmotoren 60a bis 60c, fest den jeweiligen Werkstückaufnahmen 28 zugeordnet, am Rotor 22 montiert werden können.

Wie sich bereits aus Fig. 3 ohne weiteres ergibt, wo eine Werkstückaufnahme 28 für ein Werkstück 32 dargestellt ist, können die Werkstückaufnahmen 28 durchaus zwei oder mehr Werkstücke aufnehmen, die dann gleichzeitig transportiert und behandelt werden. In Fig. 7 ist schematisch ein Teil einer entsprechenden Anlage dargestellt, bei der die Werkstückaufnahme 28 mindestens zwei Werkstückträger 68 umfasst, welche an der Werkstückaufnahme 28 drehgelagert sind. Die Werkstückaufnahme 28 selber ist ebenfalls bezüglich der Rotorscheibe 24 drehgelagert, wobei die entsprechenden Lagerungen nicht dargestellt sind. In dieser Figur sind aus Übersichtsgründen nur die für den Antrieb von Werkstückaufnahme 28 und Werkstückträgern 68 vorgesehenen Anordnungen schematisch dargestellt. Wie bereits als zweite Möglichkeit im Zusammenhang mit Fig. 6 ausgeführt, sind hier am Stator 20 und auf eine jeweilige, hier nicht dargestellte Behandlungsstation 42 ausgerichtet, ein Antriebsmotor 60a sowie mindestens zwei Antriebsmotoren 60b bzw. 60c vorgesehen. Jeder der Motoren 60a bis c weist einen zugeordneten Antriebsrotor 62a bis 62c auf.

Wenn eine entsprechende Werkstückaufnahme 28 in Behandlungsposition gedreht ist, durch Drehbewegung des Rotors 22, dann greifen die Antriebsrotoren 62 magnetisch einerseits auf die Werkstückträger 68, anderseits auf die Werkstückaufnahme 28 selber durch. Dabei kann dies, wie bezüglich Durchgriff des Antriebsrotors 62a auf die Werkstückaufnahme 28 in Fig. 7 dargestellt, direkt erfolgen, oder und vorzugsweise über eine Trennwand, analog zur Trennwand 64 von Fig. 6 an der Rotorscheibe 24.

Damit werden Werkstückaufnahme 28 und die diesbezüglichen Planeten 68, nämlich die Werkstückträger, in unabhängig voneinander ansteuerbare Rotation entsprechend Ω bzw. ω versetzt.

Grundsätzlich wird durch Realisation einer Drehbewegung der Werkstücke während ihrer Behandlung eine gegebenenfalls durch konstruktive Toleranzen bedingte Abweichung der Zentrumsachse der Behandlungsstation 42 bzw. ihrer Wirkung und des Werkstückzentrums ausgeglichen, was insbesondere bei der gleichzeitigen Behandlung von dann zwangsläufig exzentrisch angeordneten Werkstücken gemäss Fig. 7 notwendig ist, sofern eine höchst homogene Behandlungswirkung entlang der Werkstückoberfläche von hoher Wichtigkeit ist.

Auch bei der Ausbildung der Anlage gemäss Fig. 7 wird vorzugsweise auf der gleichen Seite der Rotorscheibe 24 abgepumpt, wie die Behandlungsstationen angeordnet sind.

Rückblickend auf Fig. 3, ist insbesondere ohne weiteres erkenntlich, dass Werkstückaufnahmen 28 auch beidseits der Rotorscheibe 24 angeordnet werden können und dann beidseitig am Stator die entsprechenden Öffnungen 40 zu beidseitig angeordneten Behandlungsstationen 42 vorgesehen werden. Damit ergibt sich die Möglichkeit, den Durchsatz der Anlage praktisch zu verdoppeln.

Mit der dargestellten und erläuterten, erfindungsgemässen Anlage wird mithin nebst optimalen Dichtungsverhältnissen, die eine vakuumtechnische Abschotung der jeweiligen Behandlungszonen ermöglichen, ein hohes Mass an Einsatzflexibilität erreicht, indem beispielsweise mittels austauschbarer Werkzeugaufnahmen 28 einzelne grössere Werkstückscheiben oder mehrere kleinere ein- oder zweiseitig der Rotorscheibe 24 gleichzeitig bearbeitet werden können.

Die erfindungsgemässe Anlage eignet sich insbesondere für die herstellende Behandlung von folgenden Werkstücken: Silizium-Wafer, Speicherplatten, wie Hard Disks oder CDs, dabei vorzugsweise für optische, wiederbeschreibbare Speicherdisks und weiter grundsätzlich für Werkstück-Oberflächenbehandlungen, die mehrere Vakuumprozesse erfordern, insbesondere für mehrlagenzubeschichtende Werkstücke. Dies ist primär dadurch gegeben, dass die Anlagen eine höchst zuverlässige vakuumtechnische Trennung von Behandlungsbezirken zu übrigen Anlagenhohlräumen ermöglicht, auch der jeweiligen Behandlungsbezirke voneinander, und zudem ergibt sich aufgrund der kurzen, durch die Anlagekonstruktion bedingten möglichen Taktzeiten ein hoher Durchsatz, was einfach und damit höchst wirtschaftlich erreicht wird.

## Patentansprüche

1. Vakuumdichtungsanordnung, bestehend aus einem ersten und zweiten Teil (5, 11 ), bei der der erste Teil (5) einen hydraulisch oder pneumatisch expandierbaren Hydraulik- oder Pneumatikmedium-beaufschlagbaren, mediumsdichten Raum (7a) enthält, mit einer dem zweiten Teil (11) zugewandten, am ersten Teil (5) befestigten Metallmembran (3, 3'), **dadurch gekennzeichnet, dass** die Metallmembran druckdosenähnlich mit mindestens einer Sicke versehen ist.

2. Vakuumdichtungsanordnung nach Anspruch 1, **dadurch gekennzeichnet, dass** die Metallmembran selbstrückstellend ausgebildet ist.

3. Vakuumdichtungsanordnung nach Anspruch 1 oder 2, **dadurch gekennzeichnet, dass** die Membran streifenförmig ausgedehnt ist, linear und/oder gebogen in der Streifenebene.

4. Vakuumdichtungsanordnung nach einem der Ansprüche 1 bis 3, **dadurch gekennzeichnet, dass** die Sicke bezüglich eines Symmetriezentrums oder einer Symmetrieachse der Membran symmetrisch angeordnet ist.

5. Anordnung nach einem der Ansprüche 1 bis 4, **dadurch gekennzeichnet, dass** mindestens die Partie des zweiten Teils (11, 20), welcher die Metallmembran zugewandt ist, aus Metall besteht.

6. Anordnung nach einem der Ansprüche 1 bis 5, **dadurch gekennzeichnet, dass** mindestens die Partie des zweiten Teils (11, 20), welcher die Metallmembran zugewandt ist, gummielastisch ist.

7. Anordnung nach einem der Ansprüche 1 bis 6, **dadurch gekennzeichnet, dass** die Membran im Querschnitt im wesentlichen W-förmig ausgebildet ist, mit lateral abgebogenen Seitenschenkeln und U-förmigen Umbiegungen.

8. Vakuumbehandlungsanlage mit
- einem Stator mit im wesentlichen Rotationskörper-förmigem Innenraum für
- einen Rotor (22), der eine Mehrzahl bezüglich einer Drehantriebsachse (A) beabstandeter Werkstückaufnahmen (28) umfasst,
- wobei der Stator (20) eine Mehrzahl mit dem Innenraum kommunizierender Behandlungsund/oder Durchtransportöffnungen (40, 56) für jeweils Werkstücke einer Werkstückaufnahme (28) aufweist und
- wobei jede der Werkstückaufnahmen (28) am Rotor (22) getrieben unmittelbar an jede der Oeffnungen (40, 56) am Stator (20) positionierbar ist und
- jeweils eine pneumatisch oder hydraulisch betätigbare Dichtungsanordnung die Werkstückaufnahme (28) an der Oeffnung gegenüber dem restlichen Innenraum des Stators abdichtet,
**dadurch gekennzeichnet, dass** die Dichtungsanordnung einen hydraulisch oder pneumatisch expandierbaren, Hydraulik- oder Pneumatikmedium-beaufschlagbaren, mediumsdichten Raum aufweist, mit einer druckdosenähnlich als federnde, mit mindestens einer Sicke versehene Metallmembran ausgebildeten Wandung.

9. Vakuumbehandlungsanlage nach Anspruch 8, **dadurch gekennzeichnet, dass** jede Werkstückaufnahme (28) ein hydraulisch oder pneumatisch expandierbarer Hydraulik- oder Pneumatikmedium-beaufschlagbarer, mediumdichter, umlaufender Raum hat, mit einer dem Stator zugewandten Wandung, welche eine federnde Metallmembran umfasst.

10. Vakuumbehandlungsanlage nach einem der Ansprüche 8 oder 9, wobei die Dichtungsanordnung jeweils eine Vakuumdichtungsanordnung nach einem der Ansprüche 1 bis 7 bilden.

11. Anlage nach einem der Ansprüche 8 bis 10, **dadurch gekennzeichnet, dass** alle am Stator und/oder am Rotor vorgesehenen pneumatisch oder hydraulisch betätigbaren Dichtanordnungen jeweils am Stator bzw. am Rotor mit einer gemeinsamen Druckspeise-Leitungsanordnung (50, 52), verbunden sind, am Rotor mit einer zur Rotordrehachse (A) koaxialen Speiseleitung (50).

12. Anlage nach einem der Ansprüche 8 bis 11, **dadurch gekennzeichnet, dass** statorseitig, mit rotorseitigen, Dichtanordnungen in Wirkverbindung stehende, um Öffnungen (40, 56) umlaufende, elastische, vorzugsweise gummielastische, vorzugsweise passive Dichtungen (17) vorgesehen sind.

13. Anlage nach einem der Ansprüche 8 bis 12, **dadurch gekennzeichnet, dass** der Rotor (22) im wesentlichen als Scheibe (24) ausgebildet ist, mit Werkstückaufnahmen (28) an mindestens einer der Stirnflächen der Scheibe (24), und dass an der den Werkstückaufnahmen (28) entgegengesetzten Stirnfläche der Scheibe (24) gesteuerte Abstützmittel vorgesehen sind und den Dichtungsdruck der Dichtungsanordnung am Stator (20) abstützen, vorzugsweise eine weitere Dichtungsanordnung nach einem der Ansprüche 1 bis 7.

14. Anlage nach Anspruch 13, **dadurch gekennzeichnet, dass** beidseits an den Stirnflächen der Scheibe (24) Werkstückaufnahmen (28) vorgesehen sind und beidseits im Stator (20) Behandlungs- und/oder Durchtransportöffnungen.

15. Anlage nach Anspruch 13, **dadurch gekennzeichnet, dass** am Stator mindestens einem Teil der Statoröffnungen über der Scheibe gegenüberliegend, Pump-Öffnungen vorgesehen sind.

16. Anlage nach einem der Ansprüche 8 bis 15, **dadurch gekennzeichnet, dass** mindestens ein Teil der Werkstückaufnahmen einen drehbaren Werkstückträger umfassen, und dass eine motorisch getriebene Antriebsanordnung magnetisch durch eine Trenn-Membran (64)am Rotor auf den Werkstückträger treibend durchgreift.

17. Anlage nach einem der Ansprüche 8 bis 16, **dadurch gekennzeichnet, dass** die Werkstückaufnahmen je einen oder je mehrere Träger je für ein Werkstück umfassen.

18. Verwendung der Anlage nach einem der Ansprüche 8 bis 17 für Werkstückscheiben.

19. Verwendung nach Anspruch 18 für folgende Werkstücke: Si-Wafer, Hard Disks, CD's, vorzugsweise für optische, wiederbeschreibbare Speicherdisks, für mittels mehreren Vakuumsprozessen zu behandelnde Werkstücke, insbesondere für mehrlagenzubeschichtende Werkstücke.

20. Verfahren zur Herstellung von Werkstücken, bei welchem ein Werkstück an einer Werkstückaufnahme eines Transportrotors durch eine Transportumgebung einer Öffnung eines Stators zugeführt wird, und ausgerichtet auf die Öffnung einem Behandlungsprozess unterzogen wird, dabei während der Behandlung von der Transportumgebung abgekapselt wird, **dadurch gekennzeichnet, dass** man das Werkstück während der Behandlung durch hydraulisches oder pneumatisches Expandieren einer federnden Metallmembran, die mindestens eine Sicke hat, gegen die Transportumgebung abkapselt.

21. Verfahren nach Anspruch 20, **dadurch gekennzeichnet, dass** man die Abkapselung durch Spannen der Metallmembran gegen eine metallische Gegenfläche vornimmt.

22. Verfahren nach einem der Ansprüche 20 oder 21 zur Herstellung von Si-Wafern.

23. Verfahren nach einem der Ansprüche 20 oder 21 zur Herstellung von Hard Disks.

24. Verfahren nach einem der Ansürüche 20 oder 21 zur Herstellung von CD's.

25. Verfahren nach einem der Ansprüche 20 oder 21 für die Herstellung wiederbeschreibbarer Speicherdisks.

## Claims

1. Vacuum sealing arrangement comprising a first and a second part (5, 11) in which the first part (5) contains a hydraulic or pneumatically expandable chamber (7a) which can be exposed to a hydraulic or pneumatic medium and is sealed against this medium, with a metal membrane (3, 3') facing the second part (11) and attached to the first part (5), **characterised in that** the metal membrane in the manner of a pressure vessel is fitted with at least one beading.

2. Vacuum sealing arrangement according to claim 1, **characterised in that** the metal membrane is formed self-resetting.

3. Vacuum sealing arrangement according to claim 1 or 2, **characterised in that** the membrane is expanded strip-like, linear and/or curved in the strip plane.

4. Vacuum sealing arrangement according to any of claims 1 to 3, **characterised in that** the beading is arranged symmetrical in relation to a symmetry centre or a symmetry axis of the membrane.

5. Arrangement according to any of claims 1 to 4, **characterised in that** at least the part of the second part (11, 20) facing the metal membrane consists of metal.

6. Arrangement of any of claims 1 to 5, **characterised in that** at least the part of the second part (11, 20) facing the metal membrane is resilient.

7. Arrangement according to any of claims 1 to 6, **characterised in that** the membrane is formed essentially W-shaped in cross section, with side legs bent out laterally and U-shaped folds.

8. Vacuum treatment plant with:
- a stator with an inner chamber essentially in the form of the rotation body for
- a rotor (22) which comprises a multiplicity of workpiece holders (28) spaced from a rotary drive axis (A),
- where the stator (20) has a multiplicity of treatment and/or passage openings (40, 56) communicating with the interior for workpieces respectively from a workpiece holder (24), and
- where each of the workpiece holders (28) driven on the rotor (22) can be positioned directly at each of the openings (40, 56) on the stator (20), and
- in each case a pneumatically or hydraulically activatable sealing arrangement seals the workpiece holder (28) at the opening against the remaining interior of the stator,
**characterised in that** the sealing arrangement has a hydraulically or pneumatically expandable chamber which can be exposed to a hydraulic or pneumatic medium and is sealed against this medium, with a wall formed in the manner of a pressure vessel as a resilient metal membrane fitted with at least one beading.

9. Vacuum treatment plant according to claim 8, **characterised in that** each workpiece holder (28) has a hydraulically or pneumatically expandable peripheral chamber which can be exposed to a hydraulic or pneumatic medium and is sealed against this medium, with a wall which faces the stator and comprises a resilient metal membrane.

10. Vacuum treatment plant according to any of claims 8 or 9, where the sealing arrangement respectively forms a vacuum sealing arrangement according to any of claims 1 to 7.

11. Plant according to any of claims 8 to 10, **characterised in that** all pneumatically or hydraulically activatable sealing arrangements provided on the stator and/or rotor are each connected at the stator or rotor with a common pressure supply line arrangement (50, 52), at the rotor with a supply line (50) coaxial to the rotor rotation axis (A).

12. Plant according to any of claims 8 to 11, **characterised in that** on the stator side are provided elastic, preferably resilient, preferably passive, seals (17) surrounding openings (40, 56) and operatively connected with sealing arrangements on the rotor side.

13. Plant according to any of claims 8 to 12, **characterised in that** the rotor (22) is essentially formed as a disc (24) with workpiece holders (28) on at least one of the faces of the disc (24), and that on the face of the disc (24) opposite the workpiece holders (28) are provided controlled support means which support the sealing pressure of the sealing arrangement on the stator (20), preferably a further sealing arrangement according to any of claims 1 to 7.

14. Plant according to claim 13, **characterised in that** workpiece holders (28) are provided on both sides on the faces of the disc (24) and treatment and/or transport openings on both sides in the stator (20).

15. Plant according to claim 13, **characterised in that** pump openings are provided on the stator opposite at least some of the stator openings above the disc.

16. Plant according to any of claims 8 to 15, **characterised in that** at least some of the workpiece holders comprise a rotatable workpiece carrier, and that a motorised drive arrangement driving magnetically penetrates through a separator membrane (64) on the rotor to the workpiece carrier.

17. Plant according to any of claims 8 to 16, **characterised in that** the workpiece holders each comprise one or more carriers each for one workpiece.

18. Use of the plant according to any of claims 8 to 17 for workpiece disks.

19. Use according to claim 18 for the following workpieces: Si wafers, hard disks, CD's, preferably for optical rewritable storage disks, for workpieces to be treated by means of several vacuum processes, in particular for workpieces for multilayer coating.

20. Process for manufacturing workpieces in which a workpiece at a workpiece holder of a transport rotor is supplied through a transport environment to an opening of the stator, and when aligned to the opening is subjected to a treatment process, being encapsulated from the transport environment during the treatment, **characterised in that** during the treatment the workpiece is encapsulated from the transport environment via hydraulic or pneumatic expansion of a resilient metal membrane which has at least one beading.

21. Process according to claim 20, **characterised in that** the encapsulation is performed by clamping the metal membrane against a metal counter-surface.

22. Process according to any of claims 20 or 21, for production of Si wafers.

23. Process according to any of claims 20 or 21, for production of hard disks.

24. Process according to any of claims 20 or 21, for production of CD's.

25. Process according to any of claims 20 or 21, for production of rewritable storage disks.

## Revendications

1. Dispositif d'étanchéité au vide composé d'une première et d'une seconde partie (5, 11), dans lequel la première partie (5) contient un espace (7a) étanche au milieu et apte à être sollicité par un milieu hydraulique ou pneumatique et à subir une expansion hydraulique ou pneumatique, avec une membrane métallique (3, 3') qui est tournée vers la seconde partie (11) et fixée à la première partie (5), **caractérisé en ce que** la membrane métallique est pourvue d'au moins une moulure à la manière d'une capsule anéroïde.

2. Dispositif d'étanchéité au vide selon la revendication 1, **caractérisé en ce que** la membrane métallique est conçue pour revenir toute seule à sa position initiale.

3. Dispositif d'étanchéité au vide selon la revendication 1 ou 2, **caractérisé en ce que** la membrane a la forme d'une bande et est linéaire et/ou courbe dans le plan de la bande.

4. Dispositif d'étanchéité au vide selon l'une des revendications 1 à 3, **caractérisé en ce que** la moulure est disposée symétriquement par rapport à un centre de symétrie ou à un axe de symétrie de la membrane.

5. Dispositif selon l'une des revendications 1 à 4, **caractérisé en ce que** la zone de la seconde partie (11, 20), au moins, vers laquelle est tournée la membrane métallique est en métal.

6. Dispositif selon l'une des revendications 1 à 5, **caractérisé en ce que** la zone de la seconde partie (11, 20), au moins, vers laquelle est tournée la membrane métallique, est élastique comme du caoutchouc.

7. Dispositif selon l'une des revendications 1 à 6, **caractérisé en ce que** la membrane, en section transversale, a sensiblement la forme d'un W, avec des branches latérales pliées latéralement et des parties repliées en U.

8. Installation de traitement sous vide, comprenant
- un stator avec un espace intérieur sensiblement en forme de corps de révolution pour
- un rotor (22) qui comprend plusieurs logements de pièce (28) espacés par rapport à un axe d'entraînement en rotation (A),
- étant précisé que le stator (20) comporte plusieurs ouvertures de traitement et/ou de passage (40, 56), qui communiquent avec ledit espace intérieur, pour les pièces de logements respectivement (28), et
- étant précisé que chacun des logements (28) au rotor (22) peut être amené, de manière commandée, directement au niveau de chacune des ouvertures (40, 56) du stator (20) et
- qu'un dispositif d'étanchéité à commande pneumatique ou hydraulique réalise l'étanchéité entre le logement de pièce (28), au niveau de l'ouverture, et le reste de l'espace intérieur du stator,
**caractérisé en ce que** le dispositif d'étanchéité comporte un espace étanche au milieu et apte à être sollicité par un milieu hydraulique ou pneumatique et à subir une expansion hydraulique ou pneumatique, avec une paroi conçue, à la manière d'une capsule anéroïde, comme une membrane métallique faisant ressort pourvue d'au moins une moulure.

9. Installation de traitement sous vide selon la revendication 8, **caractérisée en ce que** chaque logement de pièce (28) comprend un espace périphérique étanche au milieu et apte à être sollicité par un milieu hydraulique ou pneumatique et à subir une expansion hydraulique ou pneumatique, avec une paroi tournée vers le stator qui comprend une membrane métallique faisant ressort.

10. Installation de traitement sous vide selon la revendication 8 ou 9, dans laquelle chaque dispositif d'étanchéité forme un dispositif d'étanchéité au vide selon l'une des revendications 1 à 7.

11. Installation selon l'une des revendications 8 à 10, **caractérisée en ce que** tous les dispositifs d'étanchéité à commande pneumatique ou hydraulique qui sont prévus sur le stator et/ou sur le rotor sont reliés au niveau du stator ou du rotor à un dispositif commun formant conduite d'alimentation en pression (50, 52) et, si au niveau du rotor, à une conduite d'alimentation (50) coaxiale par rapport à l'axe de rotation de rotor (A).

12. Installation selon l'une des revendications 8 à 11, **caractérisée en ce qu'**il est prévu, côté stator, des joints d'étanchéité (17) de préférence passifs, élastiques et de préférence élastiques comme du caoutchouc, qui sont placés autour des ouvertures (40, 56) et qui sont en relation fonctionnelle avec des dispositifs d'étanchéité prévus côté rotor.

13. Installation selon l'une des revendications 8 à 12, **caractérisée en ce que** le rotor (22) est conçu globalement comme un disque (24) avec des logements de pièce (28) sur l'une au moins de ses surfaces frontales, et **en ce qu'**il est prévu, sur la surface frontale du disque (24) opposée aux logements de pièce (28), des moyens de support commandés qui supportent la pression d'étanchéité du dispositif d'étanchéité au niveau du stator (20), de préférence un autre dispositif d'étanchéité selon l'une des revendications 1 à 7.

14. Installation selon la revendication 13, **caractérisée en ce qu'**il est prévu des logements de pièce (28) des deux côtés, sur les surfaces frontales du disque (24), et des ouvertures de traitement et/ou de passage des deux côtés, dans le stator (20).

15. Installation selon la revendication 13, **caractérisée en ce qu'**il est prévu sur le stator, en face d'une partie au moins des ouvertures de stator, au-dessus du disque, des ouvertures de pompage.

16. Installation selon l'une des revendications 8 à 15, **caractérisée en ce qu'**une partie au moins des logements de pièce comprennent un porte-pièce rotatif et **en ce qu'**un dispositif d'entraînement commandé par moteur a une action d'entraînement magnétique, par l'intermédiaire d'une membrane de séparation (64) du rotor, sur le porte-pièce.

17. Installation selon l'une des revendications 8 à 16, **caractérisée en ce que** chaque logement de pièce comprend un ou plusieurs supports pour une pièce chacun.

18. Utilisation de l'installation selon l'une des revendications 8 à 17 pour des pièces en forme de disques.

19. Utilisation selon la revendication 18 pour les pièces suivantes : plaquette de silicium, disques durs, disques compacts, de préférence pour des disques optiques numériques aptes à recevoir un nouvel enregistrement, pour les pièces à traiter à l'aide de plusieurs procédés sous vide, en particulier pour des pièces à recouvrir de plusieurs couches.

20. Procédé pour fabriquer des pièces, selon lequel une pièce, au niveau d'un logement de pièce d'un rotor de transport, est amenée vers une ouverture d'un stator à travers un environnement de transport et, une fois alignée sur l'ouverture, est soumise à un traitement, en étant isolée de l'environnement de transport pendant le traitement, **caractérisé en ce qu'**on isole la pièce par rapport à l'environnement de transport, pendant le traitement, grâce à l'expansion hydraulique ou pneumatique d'une membrane métallique faisant ressort, qui a au moins une moulure.

21. Procédé selon la revendication 20, **caractérisé en ce qu'**on réalise l'isolation en serrant la membrane métallique contre une surface opposée métallique.

22. Procédé selon la revendication 20 ou 21 pour fabriquer des plaquettes de silicium.

23. Procédé selon la revendication 20 ou 21 pour fabriquer des disques durs.

24. Procédé selon la revendication 20 ou 21 pour fabriquer des disques compacts.

25. Procédé selon la revendication 20 ou 21 pour fabriquer des disques optiques numériques aptes à recevoir un nouvel enregistrement.
